(19) Europäisches Patentamt
European Patent Office
Office européen des brevets

(11) Publication number : **0 179 303 B2**

(12) **NEW EUROPEAN PATENT SPECIFICATION**

(45) Date of publication of the new patent specification : **17.06.92 Bulletin 92/25**

(51) Int. Cl.$^5$ : **C08F 10/00**, C08F 4/64

(21) Application number : **85112242.4**

(22) Date of filing : **27.09.85**

# (54) Catalysts for the polymerization of olefins.

(30) Priority : **27.09.84 IT 2286884**

(43) Date of publication of application : **30.04.86 Bulletin 86/18**

(45) Publication of the grant of the patent : **24.05.89 Bulletin 89/21**

(45) Mention of the opposition decision : **17.06.92 Bulletin 92/25**

(84) Designated Contracting States : **AT BE DE FR GB IT NL**

(56) References cited :
**EP-A- 0 086 472**
**FR-A- 2 320 957**
**LU-A- 73 593**

(56) References cited :
**CHEMICAL ABSTRACTS, vol. 94, no. 7, April 1981, page 22, no. 104128e, Columbus, Ohio, US; & JP - A - 80 133 407 (DENKIKAGAKU KOGYO K.K.) 17-10-1980**
**CHEMICAL ABSTRACTS, vol. 84, no. 10, March 1976, page 19, no. 60245c, Columbus, Ohio, US; & JP - A - 75 139 089(MITSUBISHI CHEMICAL INDUSTRIES CO., LTD.) 06-11-1975**

(73) Proprietor : **Himont Incorporated**
**Three Little Falls Centre 2801 Centerville Road**
**P.O. Box 15439**
**Wilmington Delaware 19850-5439 (US)**

(72) Inventor : **Albizzati, Enrico**
**45, via F. Baracca**
**Arona (Novara) (IT)**

(74) Representative : **Zumstein, Fritz, Dr. et al**
**Zumstein & Klingseisen Patentanwälte**
**Bräuhausstrasse 4**
**W-8000 München 2 (DE)**

EP 0 179 303 B2

## Description

This invention relates to supported catalyst components for the polymerization of olefins $CH_2$=CHR, in which R is hydrogen or an alkyl with 1—4 carbon atoms or an aryl, and of mixtures of such olefins with one another and/or with ethylene, and to the catalysts prepared from such components.

It is known how to use $TiCl_3$ in the various crystalline forms (alpha, beta, gamma and delta) as component of Ziegler-Natta catalysts for the stereoregular polymerization of olefins. The $TiCl_3$ utilized in these catalysts is generally prepared by reduction of $TiCl_4$ with Al and subsequent activation, by means of grinding, of the solid obtained ($TiCl_3$ ARA). The reduction of $TiCl_4$ may be also accomplished by means of hydrogen: the solid obtained is then activated by grinding ($TiCl_3$ HRA).

Known are also catalysts which comprises a titanium compound containing at least a Ti-Cl bond and an electron-donor, which are supported on activated magnesium halides. The catalysts supported on magnesium halides are characterized by a particularly high activity, which considerably exceeds the one of the catalysts prepared from $TiCl_3$.

From FR—A—2 320 957 catalysts are known comprising a solid component obtained by copulverizing a magnesium and/or a manganese halide and a trivalent titanium compound, as for instance $TiCl_3$, with an aromatic hydrocarbon and a tetravalent titanium compound, as for instance a titanium tetrahalide in such proportions as to have the titanium compounds supported on the magnesium and/or manganese halides.

These catalyst components, as well as the final catalysts obtained from them, do not comprise electron donor compounds and are suitable for the polymerization of ethylene and more generally for the non-stereoregular polymerization of olefins.

It has now surprisingly been found that it is possible to obtain highly active and stereospecific catalyst systems starting from catalytic components comprising a tetravalent titanium compound containing at least a Ti-Cl bond and an electron-donor compound corresponding to a particular test (Test A) supported on Ti or V trichloride or tribromide having particular surface area characteristics. The catalysts are prepared by reacting the supported component with aluminium-trialkyl compound and with an electron-donor compound corresponding to Test B specified hereinbelow.

Test A:

The electron-donor compound (EDA) is extractable with $AlEt_3$ for at least 70% by moles from the solid catalytic component under the following reaction conditions: into a 5-liter flask there are introduced 4 liters of deaerated and anhydrous n-heptane containing 20 m · moles of $Al(C_2H_5)_3$. The temperature is brought to 70°C and about 1 g of solid catalytic component is introduced, whereafter the whole is allowed to react under the stirring for 15 minutes. It is quickly cooled down to 0°C and, by filtration, a solid is isolated, which is then dried under vacuum at 25°C and analyzed.

Test B:

The electron-donor (EDB) is reactive towards $MgCl_2$, but it is not capable of forming complexes with $Al(C_2H_5)_3$ under standard conditions.

The test for determining the complexing capability of the electron-donor with $AlEt_3$ is carried out by using a Metrohom potentiograph, mod. E 536, equipped with a titration bench E 535, an automatic burette E 552, a magnetic stirrer E 549 and a titration cell EA 880. A combined electrode EA 281 (Pt/Ag/KCl 3M) is utilized.

As titration agent there is used a 0.5 M hexane solution of Al-triethyl, which is added to a 0.5 M benzene solution of the compound being tested. It is operated at room temperature and in a nitrogen atmosphere.

The reactivity test of the electron-donor compound EDA with $MgCl_2$ is carried out under the following conditions: into a 500-$cm^3$ flask there are introduced, in a nitrogen atmosphere, 2 g of $MgCl_2$ (21 m · moles) suspended in 200 $cm^3$ of toluene and 3.5 m · moles of the electron-donor compound being tested. It is allowed to react at 25°C during 1 hour, the solid is filtered and it is washed with 200 $cm^3$ of toluene and then with 200 $cm^3$ of n-heptane. The solid is isolated, dried and analyzed.

As $MgCl_2$ it is employed the product obtained from $MgCl_2 \cdot 2.5\ C_2H_5$-OH by reaction with Al-triethyl, according to the following modalities: into a 3000-ml flask there are introduced 2340 $cm^3$ of a 0.83 M hexane solution of $Al(C_2H_5)_3$; while keeping the temperature below 10°C there are added, in small doses, 136 g of $MgCl_2 \cdot 2.5$ $C_2H_5$-OH. At the end of such addition, it was heated to 70°C, keeping such temperature during 4 hours; then it is filtered and the solid is repeatedly washed with n-heptane, whereafter it is dried under a 26.6—66.5 Pa (0.2—0.5 Torr) vacuum. The surface area of the obtained $MgCl_2$ is of 618 $m^2$/g and the pores volume is of 0.532 $cm^3$/g.

The titanium or vanadium trihalide utilized for preparing the compounds of the present invention must have a surface area of at least 100 $m^2/g$ after treatment with $AlEt_3$ under standard conditions.

The standard conditions for the treatment with $AlEt_3$ are the same as indicated in test A for the extraction of electron-donor EDA.

The average dimension of the crystallites is generally below 30 nm (300Å) and preferably ranges from 6 to 25 nm (60 to 250Å). It is calculated by means of known methods and in particular, in the case of $TiCl_3$, by measuring the width, at half height, of the reflection (110)+(108) which appears—in the X-ray spectrum at an interplane distance of 0.177 nm (1.77Å) and by applicating the Sherrer equation:

$$D(110) = \frac{K \cdot 1542 \cdot 57.3}{(B-b)\cos v}$$

wherein: K=a constant, which in the specific case of $TiCl_3$ is equal to 1.84; B=width (in degrees), at half height, of the reflection (110); b=instrumental broadening; v=Bragg angle.

The presence, in the starting titanium trihalide lattice, of Al halides in amounts equal to Al contents higher than 0.5—1% by weight badly affects the catalyst activity.

By substituting, in these catalyst components, a portion of $TiCl_3$ or $VCl_3$ by $MgCl_2$ in order to have a supports mixture on which a tetravalent titanium compound and an electron-donor compound corresponding to test A can be deposited, it is possible to obtain catalysts endowed with an even higher activity.

The catalysts of the invention comprise the product of the reaction among at least the following components:

(a) an Al-alkyl compound, preferably an Al-trialkyl or a compound containing two or more Al atoms bound to one another through oxygen or nitrogen atoms or through $SO_4$ or $SO_3$ groups;

(b) an electron-donor compound (or a Lewis base) EDB which, under the standard measuring conditions, as mentioned hereinbefore, is reactive with $MgCl_2$, but does not form complexes with Al-triethyl;

(c) a solid comprising a tetravalent titanium halogenated compound and an electron-donor compound EDA supported on titanium or vanadium trichloride or tribromide, the solid component or the starting trichloride having a surface area of at least 100 $m^2/g$ after treatment with $AlEt_3$ under standard conditions, the electron-donor compound being extractable with $AlEt_3$ for at least 70% by moles from the solid.

Tetravalent Ti halogenated compound and electron-donor compound EDA supported on Ti or V trichloride or tribromide means the compounds and/or the reaction products thereof interreacted with the supports and/or physically fixed on same.

The Al-alkyl compounds of component (a) include the Al-trialkyls, such as for example $AlEt_3$, $Al(i\text{-}Bu)_3$, $Al(i\text{-}C_3H_7)_3$, $AlEt_2H$, and compounds containing two or more Al atoms bound to one another by means of heteroatoms, such as:

$$(C_2H_4)_2Al—O—Al(C_2H_5)_2,$$

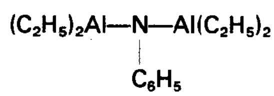

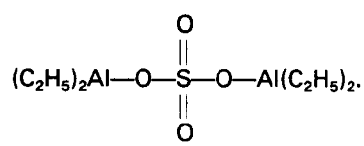

As already mentioned herein, Al-alkyl compounds in which Al atoms are bound by means of groups such as $SO_4$ or $SO_3$ are suitable as well.

The Al-alkyl compounds are employable in admixture with Al-alkyl halides, such as $AlEt_2Cl$. Compound (b) is selected in particular from compounds of general formula:

$$R_mSiY_nX_p$$

wherein: R is an alkyl, alkenyl, aryl, aryl-alkyl or cycloalkyl with 1—20 carbon atoms;

Y is a —OR′, —OCOR′, —$NR'_2$ radical in which R′, either like or unlike R, has the same meaning as R;

X is an atom of halogen or of hydrogen or a group —OCOR″ or —$NR''_2$ in which R″, like or unlike R′, is defined as R′;

m, n, p are integers, which respectively range:

*m* from 0 to 3, *n* from .1 to 4 and *p* from 0 to 1;

m+n+p is equal to 4.

Preferred silicon compounds are: phenyl - alkoxy - silanes such as phenyl - triethoxy- or phenyl - trimethoxy

- silane, diphenyl - dimethoxy and diphenyl - diethoxy - silane, monochloro - phenyl - diethoxy - silane; alkyl - alkoxy - silanes such as ethyl - triethoxy - silane, ethyl - triisopropoxy - silane.

In the catalysts according to the present invention the silicon compound is present in the combined form in the solid product of the reaction among the various components which form the catalyst, in a molar ratio between the silicon compound and the Ti halogen compound higher than 0.05 and generally ranging from 0.1 to 5.

Other compounds (b) which have proved suitable are: 2,2,6,6 - tetramethylpiperidine, 2,2,5,5 - tetramethylpyrrolidine, 2,2,6,6 - tetramethylpiperidide - Al - diethyl, di(m - methyl - phenyl) - amine, 2,2,6,6 - tetramethyl - tetrahydro - $\gamma$ - pyrone, Al - dichloromonophenoxy.

The electron-donor compound as is defined in (b) does not exhibit, at the equivalence point of the potentiometric titration with Al-triethyl conducted under the standard conditions indicated hereinbelow, any appreciable variation or wave of potential. Conversely, such modification is very sharp in the case of titration with amines such as isoquinoline and is very appreciable in the case of esters such as ethyl para-toluate.

Component (c) is preparable according to various methods. One of such methods consists in co-grinding $TCl_3$ or $VCl_3$ and the electron-donor compound and in subsequently reacting, in hot conditions, the ground product with an excess of $TiCl_4$.

Another method consists in decomposing an adduct $TiCl_3 \cdot nROH$ or $VCl_3 \cdot nROH$ (where $1 \leqq n \leqq 6$ and R is an alkyl radical having 2—8 carbon atoms) with an excess of $SiCl_4$ in the presence of the electron-donor and in treating the resulting solid, in hot conditions, with an excess of $TCl_4$. When also $MgCl_2$ is contained in component (c), $TCl_3$ or $VCl_3$, $MgCl_2$ and the electron-donor compound are ground together and the reaction product is treated in hot conditions with an excess of $TCl_4$.

The $MgCl_2$-containing $TiCl_3$ may be prepared also in other manners, one of which consisting in reducing $TiCl_4$ with $MgR_2$ or MgRCl (wherein R is a hydrocarbon radical containing 1 to 20 carbon atoms). By treating this product with the electron-donor and with $TCl_4$ it is possible to obtain a catalyst component according to the invention.

In component (c) the molar ratio between Mg dihalide and total Ti is lower than 1 and the molar ratio between total titanium and electron-donor compound ranges from 0.1 to 50.

Electron-donor compound EDA is selected among the following classes of compounds:

1) mono- and polyesters of saturated polycarboxylic acid in which at least one of the ester carbonyl groups is bound to a tertiary or quaternary carbon atom or to a linear or ramified chain with at least 4 carbon atoms;

2) mono- and polyesters of unsaturated polycarboxylic acids in which two carboxylic groups are bound to vicinal carbon atoms forming a double bond and in which at least one of the hydrocarbyl radicals R of groups COOR is a saturated or unsaturated ramified radical with 3—20 carbon atoms, or it is an aryl or arylalkyl radical with 6—20 C;

3) mono- and diesters of aromatic dicarboxylic acids with the COOH groups in ortho position, in which at least one of the hydrocarbyl radicals R contains from 2 to 20 C;

4) mono- and polyesters of aromatic hydroxy-compounds containing at least two hydroxyl groups in ortho position, or esters of hydroxyacids containing at least a hydroxyl group in ortho position with respect to the carboxyl group;

5) esters of saturated or unsaturated carboxylic acids RCOOR′ in which at least one of the hydrocarbyl radicals R and R′ is a saturated or unsaturated ramified radical with 3 up to 20 C or it is an arylalkyl radical with 7—20 C or it is an acyl radical with 3 up to 20 C bound to the carbonyl of the ester group either directly or through a methylene group and in which radical R′, if linear, is a hydrocarbyl radical containing from 1 to 20 C;

6) esters of the carbonic acid of formula:

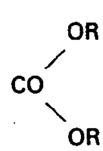

in which at least one of the hydrocarbyl radicals R, which may be equal or different, is a radical with 3 up to 20 C;

7) silicon compounds containing at least a Si-OR or SiOCOR or Si-$NR_2$ bond, in which R is a hydrocarbyl radical with 1 to 20 C.

Representative esters are:

Class 1

Diethyl - diisobutyl - malonate, diethyl - n - butyl - malonate, diethyl - di - n - butyl - malonate, diethyl - phenyl - malonate, diethyl - 1,2 - cyclohexane - dicarboxylate, dioctyl - sebacate, diisobutyl - adipate.

Class 2

Di - 2 - ethylhexyl - maleate, diisobutyl - maleate, diisobutyl - 3,4 - furandicarboxylate, di - 2 - ethylhexyl - fumarate, 2 - ethylhexyl - monomaleate.

Class 3

Diisobutyl - 2,3 - naphthalene - dicarboxylate, di - n - propyl-, di - n - butyl-, diisobutyl-, di - n - heptyl-, di - 2 - ethylhexyl-, di - n - octyl-, di - neopentyl - phthalate, monobutyl ester and mono-isobutyl ester of phthalic acid, ethyl - isobutyl - phthalate, ethyl - n - butyl - phthalate.

Class 4

2,3 - diacetoxynaphthalene, 1,2 - diacetoxybenzene, 1 - methyl - 2,3 - diacetoxybenzene, ethyl benzoyl-salicylate, methyl acetyl - salicylate.

Class 5

Ethylene glycol-pivalate, 1,4 - butadiol - pivalate, benzyl- and isobutyl-pivalate, n - propyl - pivalate, ethyl - diphenyl - acetate, isobutyl - methacrylate, isobutyl - acrylate, ethyl - benzoyl - acetate, isobutyl - pivalate, isobutyl - trans - 3 - methoxy - 2 - butenoate.

Class 6

Diphenyl-carbonate.

Preferred esters are: esters of maleic acid, pivalic acid, methacrylic acid, carbonic acid and phthalic acid, in particular the alkyl, aryl and cycloalkylesters of said acids.

As previously mentioned herein, the surface area of the solid component and of the starting Ti or V trichloride exceeds 100 $m^2/g$. The area is measured after treatment with $AlEt_3$ in standard conditions. Preferably, the surface area is higher than 150—200 $m^2/g$.

The average dimensions of the crystallites are generally below 30 nm (300Å); preferably they are lower than 25 nm (250Å) and range for example from 23 to 6 nm (230 to 60Å).

Components (a), (b) and (c) are reacted with one another in any order; however, components (a) and (b) are premixed before being brought into contact with component (c). Such pre-contact can take place also in the presence of the monomer.

Component (c) can be premixed with component (a) and/or with component (b).

Premixing of (a) and (b) occurs at temperatures usually ranging from room temperature to the temperature employed during the polymerization.

The pre-reaction of (c) and (b) may be conducted even at higher temperatures. Compound (b) can be also incorporated and reacted with said component (c).

Component (b) is reacted in a molar ratio with respect to the Ti tetravalent halogenated compound supported on component (c) of at least 1, and in a molar ratio with respect to the Al-alkyl compound employed as component (a) lower than 20 and preferably ranging from 0.05 to 1. Ratios higher than 1 are employable with compounds (b) which do not complex or only slightly complex the Al-triethyl even under conditions promoting such formation.

The catalysts according to the invention are utilized for polymerizing olefins according to known methods, i.e. when the polymerization is conducted in a liquid phase, either in the presence or in the absence of an inert hydrocarbon solvent, or in a gas phase, or also when, for example, a polymerization step in the liquid phase is combined with a polymerization step in gas phase.

Generally, the temperature ranges from 40° to 160°C, but preferably from 60° to 90°C, operating both at atmospheric pressure and at a higher pressure.

As a molecular weight regulator it is possible to use hydrogen or another known regulator.

The catalysts are particularly suited to the polymerization of ethylene, propylene, butene-1, styrene and

4-methyl-pentene-1. The catalysts are also useful to polymerize, according to known methods, mixtures of propylene and ethylene in order to prepare, for example, modified propylenes having an improved impact resistance at low temperatures (the so-called block copolymers of propylene and ethylene), or to obtain statistic crystalline copolymers of propylene with minor proportions of ethylene.

Polymerization-in-suspension of propylene

A suspension consisting of 1,000 ml of anhydrous and deaerated n-heptane, of 5 millimoles of aluminium triethyl, of the desired amount of electron-donor and of the solid catalytic component is introduced into a stainless steel autoclave having a 3000 ml capacity, equipped with an anchor-type magnetic stirrer and thermometer, thermoregulated at 60°C, whereinto propylene is made to flow.

Subsequently, hydrogen is introduced at a pressure of 19.6 kPa (0.2 atmospheres), whereafter it is rapidly heated to 70°C while simultaneously feeding propylene up to a total pressure of 686.5 kPa (7 atmospheres).

Such pressure is kept constant all through the polymerization by going on feeding the monomer. After 4 hours the polymerization is stopped and the polymer is isolated by filtration and it is dried. The polymer amount dissolved in the filtrate is isolated, weighed and summed to the polymer soluble in boiling n-heptane for the calculation of the isotacticity index (I.I.).

The results of the polymerization tests are reported on the Table.

Polymerization of propylene in liquid monomer

A proper amount of the catalytic complex prepared in the examples and 50 ml of anhydrous and deaerated n-heptane are introduced; together with 5 m · moles of $Al(C_2H_5)_3$ and 1 m · mole of phenyltriethoxysilane, under a dry argon pressure, into a stainless steel 2-liter autoclave, equipped with an anchor-type stirrer, heated to 70°C and containing hydrogen for a partial pressure of 19.6 kPa (0.2 atm.) and 500 g of anhydrous propylene. After 4 hours the reaction is stopped, the non-polymerized propylene is discharged, and from the autoclave the polymer is extracted, which is then dried and weighed.

The results of this polymerization test are reported on the Table (test 1*).

Example 1

Into a jar of a vibrating mill having a total volume of 1 liter and containing 3 kg of steel balls of 16 mm diameter there were introduced, in a nitrogen atmosphere, 45 g of $TiCl_3$ and 7.7 ml of diisobutylphthalate; it was ground during 70 hours at room temperature. 10 g of the resulting solid were suspended in 100 ml of $TiCl_4$ and the whole was allowed to react, under stirring, at 100°C during 2 hours. After such period of time, $TiCl_4$ was removed by filtration and an equal amount thereof was added, allowing to react for further 2 hours at 120°C; $TiCl_4$ was removed by filtration, and washings with n-heptane at 90°C were carried out until disappearance of the chlorine ions in the filtrate.

After isolation and drying under vacuum, the solid exhibited, on analysis, the following composition:

Ti= 25.1 %

DIBF = 4.1 %.

The surface area of the catalyst component was of 212 $m^2/g$ (B.E.T.) and the crystallite dimension was of 23 nm (230Å) (D( 110)).

The polymerization tests carried out by using this catalyst component, and the properties of the resulting polymer are indicated on the Table.

Example 2

Example 1 was repeated by using, instead of diisobutylphthalate, 4.5 ml of isobutyl pivalate.

The solid, after isolation and drying under vacuum, exhibited on analysis the following composition:

Ti= 26.7%

IBP= 4.5%.

The surface area of the catalyst component was of 151 $m^2/g$ and the size of the crystallites was of 15 nm (150Å) (D(110)).

The polymerization test carried out using this catalyst component and the properties of the resulting polymer are reported on the Table.

Example 3

Into a 250 cc test tube there were introduced 42 g of $VCl_3 \cdot 3C_2H_5OH$ and 200 ml of $SiCl_4$; it was reacted at reflux during 48 hours. The solid obtained after filtration and washing with n-heptane was suspended at 60°C in 100 ml of n-heptane containing 15 m · moles of diisobutyl - phthalate; it was allowed to react during 2 hours at the same temperature, then the solid was isolated by filtration and was suspended in 150 ml of $TiCl_4$ under stirring at 100°C for two hours. After such period of time, $TiCl_4$ was removed by filtration and an equal amount thereof was added allowing to react for further 2 hours at 120°C; $TiCl_4$ was removed by filtration, and washings with n-heptane at 90°C were carried out until disappearance of the chlorine ions from the filtrate.

The isolated and vacuum-dried solid exhibited on analysis the following composition:

Ti= 4.2%

V= 20.4%

DIBF= 4%.

The surface area of the catalyst component was of 162 $m^2/g$ and the dimension of the crystallites was of 19 nm (190Å) (D(110)).

The polymerization test conducted by using this catalyst component as well as the properties of the polymer so obtained are reported on the Table.

Example 4

Example 1 was repeated by subjecting to reaction with $TiCl_4$ 10 g of the product obtained by co-grinding 12.6 g of $MgCl_2$, 20.51 g of $TiCl_3HR$ and 7.4 ml of diisobutyl - phthalate.

The solid dried under vacuum exhibited on analysis the following composition:

Ti= 8.15%

Mg= 11.2%

DIBF= 4.24%

Surface area=208 $m^2/g$

Crystallite size=6.5 nm (65Å) (D(110)).

The polymerization test carried out by using this catalyst component, and the properties of the resulting polymer are reported on the Table.

Example 5

Example 1 was repeated by subjecting to reaction with $TiCl_4$ 10 g of the product obtained by co-grinding 11.6 g of $MgCl_2$, 34 g of $TiCl_3HR$ and 10 ml of diisobutylphthalate.

The solid dried under vacuum exhibited on analysis the following composition:

Ti= 11.8%

Mg= 6.7%

DIBF= 4.6%

Surface area=232 $m^2/g$

Crystallite dimension=11 nm (110Å) (D(110)).

The polymerization test carried out by using this catalyst component, as well as the properties of the polymer obtained are reported on the Table.

Example 1 (comparative test)

The polymerization test of example 1 was repeated with the exception that ethyl p · toluate (EPT) was utilized instead of phenyltriethoxysilane. The molar ratio between Al-triethyl and EPT was equal to 3.3.

Polymerization conditions and properties of the polymer are reported on the Table.

Example 2 (comparative test)

The preparation of the catalyst component of example 1 was repeated with the exception that $TiCl_3$ ARA was employed instead of $TiCl_3$ HR. The surface area of the solid after treatment with $TiCl_4$ was of 52 $m^2/g$.

The results of the polymerization test and the properties of the obtained polymer are reported on the Table.

TABLE

| Solid catalyst component | | Electron-donor compound | | Polymer (g) | Yield g · PP/g · cat. | II (%) | inh · η (dl/g) |
|---|---|---|---|---|---|---|---|
| Ex. No. | m g | EDB | Al/EDB | | | | |
| 1 | 28 | FES | 5 | 202 | 7200 | 93 | 2.61 |
| 1* | 18 | FES | 5 | 333 | 18500 | 93.4 | 2.24 |
| 1 | 29 | DPMS | 5 | 240 | 8300 | 93.1 | 2.23 |
| 1 | 35 | TMP | 2.5 | 105 | 3000 | 86.6 | 2.92 |
| 2 | 38 | FES | 5 | 156 | 4100 | 92.2 | 2.6 |
| 3 | 34 | FES | 5 | 155 | 4550 | 91.2 | 2.4 |
| 4 | 27 | FES | 5 | 232 | 8600 | 91.7 | 1.85 |
| 5 | 24 | FES | 5 | 194 | 8100 | 92.4 | 2.31 |
| 1 (compar.) | 40 | EPT | 3.3 | 20 | 500 | 91.9 | 2.3 |
| 2 (compar.) | 42 | FES | 5 | 21 | 500 | 91 | 2.2 |

FES=Phenyl-triethoxy-silane
TMP=2,2,6,6-tetramethyl-piperidine
DPMS=diphenyl-dimethoxy-silane
EPT=ethyl p · toluate
*Polymerization was conducted in liquid monomer.

## Claims

1. Catalyst components for the polymerization of olefins comprising a tetravalent titanium halogenated compound and an electron-donor compound EDA, which are supported on titanium or vanadium trichloride or tribromide having a surface area of at least 100 $m^2/g$, the electron-donor compound being characterized in that it is extractable with $AlEt_3$ for at least 70% by moles, the test of extractability being carried out at 70°C for 15 minutes with a 0.005 molar solution of $AlEt_3$ in n-heptane containing 250 mg/l of the catalyst component under stirring after which the resulting mixture is quickly cooled down to 0°C and, by filtration, a solid is isolated, which is then dried under vacuum at 25°C and analyzed; and being selected among the following classes of compounds:

1) nono- and polyesters of saturated polycarboxylic acids in which at least one of the ester carbonyl groups is bound to a tertiary of quaternary carbon atom or to a linear or ramified chain with at least 4 carbon atoms;

2) mono- and polyesters of unsaturated polycarboxylic acids in which two carboxylic groups are bound to vicinal carbon atoms forming a double bond and in which at least one of the hydrocarbyl radicals R of groups COOR is a saturated or unsaturated ramified radical with 3-20 carbon atoms, or it is an aryl or arylalxyl radical with 6-20 C;

3) mono- and diesters of aromatic dicarboxylic acids with the COOH groups in ortho position, in which at least one of the lydrocarbyl radicals R contains from 2 to 20 C;

4) mono- and polyesters of aromatic hydroxy-compounds containing at least two hydroxyl groups in ortho position, or esters of hydroxyacids containing at least a hydroxyl group in ortho position with respect to the carboxyl group;

5) esters of saturated or unsaturated carboxylic acids RCOOR′ in which at least one of the hydrocarbyl radicals R and R′ is a saturated or unsaturated ramified radical with 3 up to 20 C or it is an arylalkyl radical with 7-20 C or it is an acyl radical with 3 up to 20 C bound to the carbonyl of the ester group either directly or through a methylene group and in which radical R′, if linear, is a hydrocarbyl radical containing from 1 to 20 C;

6) esters of the carbonic acid of formula:

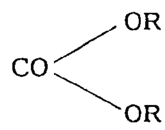

in which at least one of the hydrocarbyl radicals R, which may be equal or different, is a radical with 3 up to 20 C;

7) silicon compounds containing at least a Si-OR or SiOCOR or Si-$NR_2$ bond, in which R is a hydrocarbyl radical with 1 to 20 C.

2. The catalyst components according to claim 1, in which the support is titanium trichloride.

3. The catalyst components according to claims 1 and 2, in which compound EDA is selected from the alkyl, aryl and cycloalkyl esters of the maleic, pivalic, methacrylic, carbonic and phthalic acids.

4. The catalyst components according to claim 3, in which the tetravalent titanium halogenated compound is $TiCl_4$.

5. Catalysts for the polymerization of olefins comprising the product of the reaction among the following components:

a) an Al-alkyl compound,

b) an electron-donor compound EDB which is reactive with $MgCl_2$, but does not form complexes with the Al-alkyl, the test of reactivity with $MgCl_2$ and the test for the complexation with Al-alkyl being carried out as described in the Test B described in the description,

c) a component as is described in the preceding claims.

6. The catalysts according to claim 5, in which component a) is an Al-trialkyl such as $AlEt_3$, Al(i-$Bu)_3$, Al(i-$C_3H_7)_3$, $AlEt_2H$ or a compound containing two or more Al atoms bound to one another through atoms of oxygen or of nitrogen or groups $SO_4$ or $SO_3$, such as

$$(C_2H_5)_2Al—O—Al(C_2H_5)_2,$$

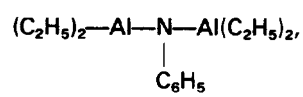

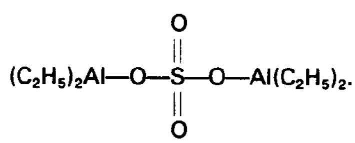

7. The catalysts according to claim 5, in which component b) is selected from the compounds of general formula

$$R_mSiY_nX_p$$

wherein:

R is an alkyl, alkenyl, aryl, aryl-alkyl or a cycloalkyl with 1-20 carbon atoms;

Y is a radical —OR′, —OCOR′, —$NR'_2$ in which R′, ehther like or unlike R, has the same meaning as R;

X is an atom of halogen or of hydrogen or a group —OCOR″ or —$NR''_2$ in which R″, like or unlike R′, has the same meaning as R′;

m, n, p are integers ranging:

*m* from 0 to 3, *n* from 1 to 4 and *p* from 0 to 1;

m+n+p being equal to 4.

8. The catalysts according to claim 7, in which component b) is selected from the following compounds: phenyl - alkoxy - silanes such as phenyl - trimethoxy- or phenyl - trimethoxy - silane, diphenyl - dimethoxy- and diphenyl - diethoxy - silane, monochlorophenyl - diethoxy - silane; alkyl - alkoxy - silanes such as ethyl - triethoxy - silane, ethyl - triiso - propoxy - silane.

9. The catalysts according to claim 5, in which component b) is selected from the following compounds: 2,2,6,6 - tetramethylpiperidine, 2,2,5,5 - tetramethylpyrrolidine, 2,2,6,6 - tetramethylpiperidide - Al - diethyl, di(m - methyl - phenyl) - amine, 2,2,6,6 - tetramethyl - tetrahydro - γ - pyrone, Al - dichloro - monophenoxy.

10. A process for polymerizing olefins of formula $CH_2$=CHR, in which R is hydrogen or an alkyl with 1 to 4 carbon atoms or an aryl, and mixtures of such olefins with one another and/or with ethylene, in the presence of catalysts as are defined in the preceding claims 5 through 9.

11. The process according to claim 10, in which propylene is polymerized in the presence of catalysts as are defined in the preceding claims 5 through 9.

12. The process according to claim 11, in which propylene is polymerized in liquid phase.

## Patentansprüche

1. Katalysatorkomponenten für die Polymerisation von Olefinen/umfassend eine vierwertige halogenierte Titanverbindung und eine Elektronendonatorverbindung EDA, die von Titan- oder Vanadiumtrichlorid oder -tribromid mit einer Oberfläche von mindestens 100 $m^2/g$ getragen sind, wobei die Elektronendonatorverbindung dadurch gekennzeichnet ist, daß sie mit $AlEt_3$ zu mindestens 70 Mol% extrahierbar ist, wobei der Extrahierbartieitstest bei 70°C während 15 min mit einer 0,005 molaren Lösung vonAlEt3 9 in n-Heptan,enthaltend 250 mg/l katalysatorkomponente, unter Rühren durchgeführt wird, worauf die erhaltene Mischung rasch auf 0°C abgekühlt und durch Filtrieren ein Feststoff isoliert wird, der dann unter Vakuum bei 25°C getrocknet und analisert wird; und unter den folgenden Verbindungsklassen ausgewählt ist:

1) den Mono- und Polyestern von gesättigten Polycar bonsäuren, worin zumindest eine der Estercarbonyl gruppen an ein tertiäres oder quaternäres Kohlen stoffatom oder an eine lineare oder verzweigte Kette mit zumindest 4 Kohlenstoffatomen gebunden ist

2) den Mono- und Polyestern von ungesättigten Polycarbonsäuren, worin 2 Carboxylgruppen an benach barte, eine Doppelbindung bildende Kohlenstoffatome gebunden sind, und worin zumindest einer der Kohlenwasserstoffreste R der Gruppen COOR ein gesättigter oder ungesättigter verzweigter Rest mit 3 bis 20 Kohlenstoff ist oder ein Aryl- oder Aralkylrest mit 6 bis 20 C ist

3) den Mono- und Diestern von aromatischen Dicarbonsäuren, bei denen die COOH-Gruppen in ortho-Stellung vorliegen, worin zumindest einer der Kohlenwasserstoffreste R 2 bis 20 C enthält

4) den Mono- und Polyestern von aromatischen Hydroxyverbindungen, die zumindest zwei Hydroxylgruppen in ortho-Stellung enthalten oder den Estern von Hydroxysäuren, die zumindest eine Hydroxylgruppe in ortho-Stellung in Bezug auf die Carboxylgruppe enthalten

5) den Estern von gesättigten oder ungesättigten Carbonsäuren RCOOR′, worin zumindest einer der Kohlenwasserstoffreste R und R′ ein gesättigter oder ungesättigter verzweigter Rest mit 3 bis zu 20 C ist oder ein Aralkylrest mit 7 bis 20 C ist oder ein Acylrest mit 3 bis zu 20 C ist, der an die Carbonylgruppe der Estergruppe entweder direkt oder über eine Methylengruppe gebunden ist, und worin der Rest R′, wenn er linear ist, einen Kohlenwasserstoffrest mit 1 bis 20 C wiedergibt

6) den Kohlensäureestern der Formel

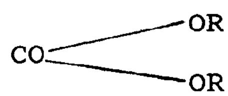

worin zumindest einer der Kohlenwasserstoffreste R, die gleich oder verschieden sein können, ein Rest mit bis zum 20 C ist

7) den Siliciumverbindungen, die zumindest eine Si-OR- oder SiOCOR- oder Si-$NR_2$-Bindung enthalten, worin R für einen Kohlenwasserstoffrest mit 1 bis 20 C steht.

2. Katalysatorkomponenten. nach Anspruch 1, in welchen der Träger Titantrichlorid ist.

3. Katalysatorkomponenten. nach den Ansprüchen 1 und 2, in welchen die Verbindung EDA ausgewählt ist aus den Alkyl-, Aryl- und Cycloalkylestern der Malein-, Pivalin-, Methacryl-, Kohlen- und Phthalsäure.

4. katalysatorkomponenten nach Anspruch 3, in welchen die vierwertige halogenierte Titanverbindung $TiCl_4$ ist.

5. Katalysatoren für die Polymerisation von Olefinen umfassend das Produkt der Reaktion unter den folgenden Komponenten:

a) einer Al-Alkylverbindung,

b) einer Elektronendonatorverbindung EDB, die mit $MgCl_2$ reaktionsfähig ist, aber mit der Al-Alkylverbindung keine Komplexe bildet, wobei der Reaktionsfähigkeitstest mit $MgCl_2$ und der Test auf Komplexbildung mit der Al-Alkylverbindung durchgeführt wird, wie in dem in der Beschreibung beschriebenen Test B beschrieben,

c) eine Komponenter, wie in den vorhergehenden Ansprüchen be schrieben.

6. Katalysatoren nach Anspruch 5, in welchen Komponente a) eine Al-Trialkylverbindung, wie $AlEt_3$, Al(i-Bu)$_3$, Al(i-$C_3H_7$)$_3$, $AlEt_2H$ oder eine Verbindung mit zwei oder mehr Al-Atomen, die miteinander durch Sauerstoff-oder Stickstoffatome oder Gruppen $SO_4$ oder $SO_3$ verbunden sind, wie

$(C_2H_5)_2Al\text{-}O\text{-}Al(C_2H_5)_2$,

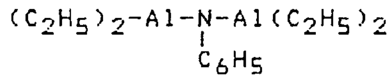

oder

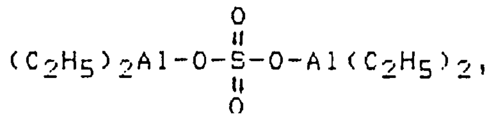

ist

7. Katalysatoren nach Anspruch 5, in welchen Komponente b) ausgewählt ist aus den Verbindungen der allgemeinen Formel

$R_mSiY_nX_p$ ,

worin

R Alkyl, Alkenyl, Aryl, Arylalkyl oder Cycloalkyl mit 1 bis 20 C-Atomen ist;

Y einen Rest -OR′, -OCOR′ oder -$NR'_2$ bedeutet, wobei R′, das gleich oder ungleich R ist, die gleiche Bedeutung wie R hat;

X ein Halogen- oder Wasserstoffatom oder eine Gruppe -OCOR″ oder -$NR''_2$ darstellt, worin R″, das gleich oder ungleich R′ ist, die gleiche Bedeutung wie R′ hat;

m, n und p ganze Zahlen sind, wobei

m Null bis 3 ist, n 1 bis 4 ist und p Null bis 1 ist und

m + n + p gleich 4 sind.

8. Katalysatoren nach Anspruch 7, in welchen Komponente b) ausgewählt ist aus den folgenden Verbindungen : Phenylalkoxysilanen, wie Phenyltriäthoxy- oder Phenyltrimethoxysilan, Diphenyldimethoxy- und Diphenyldiäthoxysilan und Monochlorphenyldiäthoxysilan, und Alkylalkoxysilanen, wie Äthyltriäthoxysilan und Äthyltriisopropoxysilan.

9. Katalysatoren nach Anspruch 5, in welchen Komponente b) ausgewählt ist aus den folgenden Verbindungen: 2,2,6,6-Tetramethylpiperidin, 2,2,5,5-Tetramethylpyrrolidin, 2,2,6,6-Tetramethylpiperidid-Al-diäthyl, Di-(m-methylphenyl)-amin, 2,2,6,6-Tetramethyltetrahydro-γ-pyron und Al-Dichlormonophenoxy.

10. Verfahren zum Polymerisieren von Olefinen der Formel $CH_2$=CHR, worin R Wasserstoff, Alkyl mit 1 bis 4 Kohlenstoffatomen oder Aryl bedeutet, und Mischungen derartiger Olefine miteinander und/oder mit Äthylen in Anwesenheit von Katalysatoren, wie sie in den vorhergehenden Ansprüchen 5 bis 9 definiert sind.

11. Verfahren nach Anspruch 10, worin Propylen in Anwesenheit von Katalysatoren, wie sie in den vorhergehenden Ansprüchen 5 bis 9 definiert sind, polymerisiert wird.

12. Verfahren. nach Anspruch 11, worin Propylen in flüssiger Phase polymeriziert wird.

## Revendications

1. Composants de catalyseur pour la polymérisation d'oléfines comprenant un dérivé halogéné du titane tétravalent et un dérivé électro-donneur EDA, fixés sur un support consistant en trichlorure ou tribromure de titane ou de vanadium et dont la surface spécifique est au moins égale à 100 $m^2/g$, le dérivé électro-donneur étant caractérisé en ce qu'il est extractible à l'aide de $Al_2O_3$, à concurrence d'au moins 70% en moles, le test d'extractibilité étant mis en oeuvre à 70°C pendant 15 minutes à l'aide d'une solution 0,005 molaire de $AlEt_3$ dans du n-heptane contenant 250 mg/l du composant de catalyseur, sous agitation, ce après quoi on refroidit rapidement le mélange à 0°C et, par filtration, on isole un solide que l'on sèche ensuite sous vide à 25°C et analyse, et qui soit choisi parmi les classes de composés suivantes:

(1) les mono- et polyesters d'acides polycarboxyliques saturés dans lesquels au moins un des groupes carbonyl ester est lié à un atome de carbone tertiaire ou quater naire ou à une chaîne linéaire ou ramifiée comportant au moins 4 atomes de carbone;

(2) les mono- et polyesters d'acides polycarboxyliques insa turés dans lesquels deux groupes carboxyliques sont liés à des atomes de carbone vicinaux formant une double liaison et dans lesquels au moins l'un des radicaux hydrocarbyles R des groupes COOR est un radical ramifié, saturé ou insaturé, comportant

3 à 20 atomes de carbone, ou il consiste en un radical aryle ou un arylalkyle comportant de 6 à 20 atomes de carbone;

(3) les mono- et diesters d'acides bicarboxyliques aromatiques comportant des groupes COOH sont en position ortho, dans lesquels au moins l'un des radicaux hydrocarbonés R contient de 2 à 20 atomes de carbone;

(4) les mono- et polyesters de composés hydroxyaromatiques contenant au moins deux groupes hydroxyles en position ortho, ou des esters d'hydroxyacides contenant au moins un groupe hydroxyle en position ortho par rapport au groupe carboxylique;

(5) les esters d'acide carboxylique saturés ou insaturés RCOOR′ dans lesquels au moins l'un des radicaux hydrocarbonés R et R′ est un radical ramifié saturé ou insaturé comprenant de 3 jusqu'à 20 atomes de carbone ou il consiste en un radical arylakyle renfermant de 7 à 20 atomes de carbone ou en un radical alkyle comprenant de 3 à 20 atomes de carbone liés au carbonyle du groupe ester, soit directement, soit par l'intermédiaire d'un groupe méthylène et dans lequel le radical R′, s'il est linéaire, est un radical hydrocarboné contenant de 1 à 20 ato mes de carbone;

(6) les esters de l'acide carbonique de formule:

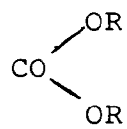

dans laquelle au moins l'un des radicaux hydrocarbonés R, qui pouvent être identiques ou différents, est un radical renfermant de 3 à 20 atomes de carbone;

(7) les composés du silicium contenant au moins une liaison Si-OR, SiOCOR ou Si-$NR_2$, dans laquelle R est un radical hydrocarboné comprenant 1 à 20 atomes de carbone.

2. Les composants de catalyseur selon la revendication 1, caractérisés en ce que le support est du trichlorure de titane.

3. Les composants de catalyseur selon les revendications 1 et 2, caractérisés en ce que le dérivé EDA est choisi parmi les esters alkyliques, aryliques et cycloalkyliques des acides maléïques, pivaliques, méthacryliques, carboniques et phtaliques.

4. Les composants de catalyseur selon la revendication 3, caractérisés en ce que le dérivé halogéné du titane tétravalent est le $TiCl_4$.

5. Catalyseurs de polymérisation des oléfines comprenant le produit de la réaction entre les composants suivants:

a) un dérivé d'alkyl-Al;

b) un dérivé électro-donneur EDB réagit avec $MgCl_2$ , mais ne forme pas de complexe avec l'alkyl-Al, le test de réactivité avec $MgCl_2$ et le test de formation de complexe avec l'alkyl-Al étant mis en oeuvre comme indiqué dans le test B inclus dans la description;

c) un composant tel que décrit dans les revendications précédentes.

6. Les catalyseurs selon la revendication 5, caractérisés en ce que le composant a) est un trialkyl-Al tel que, par exemple, $AlEt_3$, $Al(i\text{-}Bu)_3$, $Al(i\text{-}C_3H_7)_3$, $AlEt_2H$ ou un dérivé contenant deux ou plus de deux atomes d'aluminium liés entre eux par des atomes d'oxygène ou d'azote ou des groupes $SO_4$ ou $SO_3$ tels que, par exemple:

$(C_2H_5)_2Al\text{-}O\text{-}Al(C_2H_5)_2$,

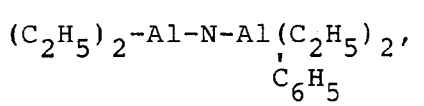 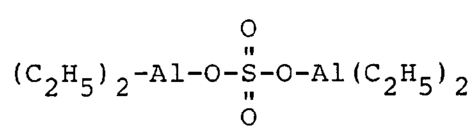

7. Les catalyseurs selon la revendication 5, dans lesquels le composant b) est choisi parmi les composants présentant la formule générale:

$$R_mSiY_nX_p$$

dans laquelle:

R représente un radical alkyle, alkényle, aryle, arylalkyle ou un radical cycloalkyle renfermant de 1 à 20 atomes de carbone;

Y représente un radical -OR′, -OCOR′, -$NR'_2$ dans lequel R′, soit identique à R soit différent de R, a la

même signification que R;

X représente un atome d'halogène ou d'hydrogène ou un groupe -OCOR″ ou -NR″$_2$ dans lequel R″, identique à R′ ou différent de R′, a la même signification que R′;

m, n, p, sont des nombres entiers:

m étant compris entre 0 et 3, n étant compris entre 1 et 4, et p étant égal à 0 ou à 1;

m + n + p étant égal à 4.

8. Les catalyseurs selon la revendication 7, caractérisés en ce que le composant b) est choisi parmi les dérivés suivants: des phénylalkoxysilanes tels que, par exemple phényltriéthoxy- ou phényltriméthoxysilane, diphénylméthoxy et diphényldiéthoxysilane; des monochlorophényldiéthoxysilanes; des alkylalkoxysilanes tels que, par exemple éthyltriéthoxysilane, éthyltriéthoxysilane, éthyltriisopropoxysilane.

9. Les catalyseurs selon la revendication 5, caractérisés en ce que le composant b) est choisi parmi les dérivés suivants: le 2,2,6,6-tétraméthylpipéridine, le 2,2,5,5-tétraméthylpyrrolidine, le 2,2,6,6-tétraméthylpipéridide-Al-diéthyle, le di(m-méthylphényl)-amine, le 2,2,6,6-tétraméthyltétrahydro-α-pyrone, le Al-dichloromonophénoxy.

10. Un procédé de polymérisation d'oléfines de formule $CH_2$=CHR, dans lequel R représente un atome d'hydrogène ou un radical alkyle renfermant de 1 à 4 atomes de carbone ou un radical aryle, et des mélanges de ces oléfines l'une avec l'autre et/ou avec l'éthylène, en présence de catalyseurs tels que ceux définis dans les revendications précédentes 5 à 9.

11. Le procédé selon la revendication 10, caractérisé en ce que le propylène est polymérisé en présence de catalyseurs tels que définis dans les revendications 5 à 9 précédentes.

12. Le procédé selon la revendication 11, dans lequel le propylène est polymérisé en phase liquide.